# EUROPEAN PATENT SPECIFICATION

(11) **EP 4 360 974 B1**
(45) Date of publication and mention of the grant of the patent: **24.06.2026**
(21) Application number: 23202356.4
(22) Date of filing: 09.10.2023
(51) Int. Cl.: B60W 30/09, B60W 30/12, B60W 60/00

(54) **VEHICLE CONTROL SYSTEM AND VEHICLE CONTROL METHOD**
FAHRZEUGSTEUERUNGSSYSTEM UND FAHRZEUGSTEUERUNGSVERFAHREN
SYSTÈME DE COMMANDE DE VÉHICULE ET PROCÉDÉ DE COMMANDE DE VÉHICULE

(30) Priority: 31.10.2022 JP 2022174491
(43) Date of publication of application: 01.05.2024
(73) Proprietor: TOYOTA JIDOSHA KABUSHIKI KAISHA, Toyota-shi, Aichi-ken, 471-8571 (JP)
(72) Inventor: NAKAMURA, Satoshi, Toyota-shi, 471-8571 (JP); HASHIMOTO, Sho, Toyota-shi, 471-8571 (JP)
(74) Representative: J A Kemp LLP

(56) References cited:
- EP-A1- 4 052 983
- EP-A1- 4 406 803
- EP-A2- 2 894 081

## Description

### BACKGROUND

### Field

The present disclosure relates to a technique for controlling a vehicle capable of autonomous driving.

### Background Art

Patent Literature 1 discloses a technique related to switching a driving state of a vehicle from manual driving to autonomous driving. According to Patent Literature 1, an autonomous driving device, which switches the driving state, acquires a manual driving operation amount by a driver of the vehicle and an autonomous driving operation amount, which is an operation amount after the vehicle is switched to the autonomous driving.
Then, only when a difference between the manual driving operation amount and the autonomous driving operation amount is equal to or less than a threshold value, the autonomous driving device performs switching from the manual driving to the autonomous driving in accordance with a switching request from the driver.

### List of Related Art

Patent Literature 1: Japanese Laid-Open Patent Application No. JP-2017-001597. Known art includes EP4052983A1, which describes a method for transitioning a drive mode of a vehicle, drive control system for a vehicle and a vehicle.

### SUMMARY

A vehicle control system having both an autonomous driving function for controlling autonomous driving of a vehicle and a driving support control function for supporting driving of the vehicle for preventive safety is considered. There is a case where the autonomous driving function outputs an autonomous driving start request to start the autonomous driving after driving support control starts to operate during manual driving of the vehicle or the like. In this case, if the autonomous driving start request is received and the autonomous driving is started unexceptionally, a control amount output by the driving support control function is not reflected in behavior of the vehicle, and there is a possibility that the occupant feels uncomfortable.

The present disclosure is made in view of the above-described problem. An object of the present disclosure is to provide, in a vehicle having an autonomous driving function and a driving support control function, a technique capable of reducing discomfort of the occupant caused by a control amount of the driving support control function being unexceptionally prevented from being transmitted.

A first aspect of the present disclosure as defined in claim 1 relates to a vehicle control system for controlling a vehicle capable of autonomous driving.

The vehicle control system includes one or more processors.

The one or more processors are configured to:
when an operation condition is satisfied, perform driving support control that controls at least one of steering, acceleration, and deceleration of the vehicle for improving travel safety of the vehicle or for stabilizing behavior of the vehicle; and
when receiving an autonomous driving start request to start the autonomous driving during operation of the driving support control, permit starting the autonomous driving only when a permission condition is satisfied,
wherein the permission condition is that a transition suspension time elapses after the autonomous driving start request is received;
wherein the one or more processors are further configured to:
   when receiving the autonomous driving start request during operation of the driving support control, determine whether or not a first control direction for the autonomous driving is consistent with a second control direction for the driving support control;
   set a first time as the transition suspension time when the first control direction is consistent with the second control direction; and
   set a second time as the transition suspension time when the first control direction is not consistent with the second control direction,
   wherein the second time is longer than the first time.

A second aspect of the present disclosure as defined in claim 3 relates to a method for controlling a vehicle capable of autonomous driving.

The method includes:
when an operation condition is satisfied, performing driving support control that controls at least one of steering, acceleration, and deceleration of the vehicle for improving travel safety of the vehicle or for stabilizing behavior of the vehicle; and
when receiving an autonomous driving start request to start the autonomous driving during operation of the driving support control, permitting starting the autonomous driving only when a permission condition is satisfied
wherein the permission condition is that a transition suspension time elapses after the autonomous driving start request is received;
wherein the method further comprises:
   when receiving the autonomous driving start request during operation of the driving support control, determining whether or not a first control direction for the autonomous driving is consistent with a second control direction for the driving support control;
   setting a first time as the transition suspension time when the first control direction is consistent with the second control direction; and
   setting a second time as the transition suspension time when the first control direction is not consistent with the second control direction,
   wherein the second time is longer than the first time.

According to the technique of the present disclosure, when the autonomous driving is requested to start during operation of the driving support control, the autonomous driving is permitted to start only when the permission condition is satisfied. Since the autonomous driving is not unexceptionally started, effect of the driving support control continues at least to a certain extent. Since the effect of the driving support control does not suddenly disappear, discomfort of the occupant can be reduced. The invention is defined in the independent claims. Further aspects and preferred embodiments are defined in the dependent claims. Any aspects, embodiments and examples of the present disclosure which do not fall under the scope of the appended claims do not form part of the invention and are merely provided for illustrative purposes

### BRIEF DESCRIPTION OF THE DRAWINGS

Fig. 1 is a block diagram showing a configuration example of a vehicle control system according to a present embodiment.
Fig. 2 is a block diagram showing an example of driving environment information.
Fig. 3 is a schematic diagram for explaining autonomous driving control.
Fig. 4 is a schematic diagram for explaining an example of driving support control.
Fig. 5 is a block diagram showing an example of a functional configuration of the vehicle control system according to the present embodiment.
Fig. 6 is a flowchart showing an example of processing according to a first embodiment which is useful for understanding the invention.
Fig. 7 is a flowchart showing an example of processing according to a second embodiment, in line with the scope of the invention.
Fig. 8 is a diagram showing an example of a scene in which a first control direction and a second control direction is not consistent with each other.
Fig. 9 is a diagram showing an example of a scene in which the first control direction and the second control direction is consistent with each other.
Fig. 10 is a flowchart showing an example of processing according to a third embodiment which is useful for understanding the invention.
Fig. 11 is a flowchart showing an example of processing according to a fourth embodiment which is useful for understanding the invention.
Fig. 12 is a flowchart showing an example of processing according to a fifth embodiment, in line with the scope of the invention.
Fig. 13 is a flowchart showing an example of processing according to a sixth embodiment, in line with the scope of the invention.

### DETAILED DESCRIPTION

Embodiments of the present disclosure will be described with reference to the accompanying drawings.

### 1. Vehicle Control System

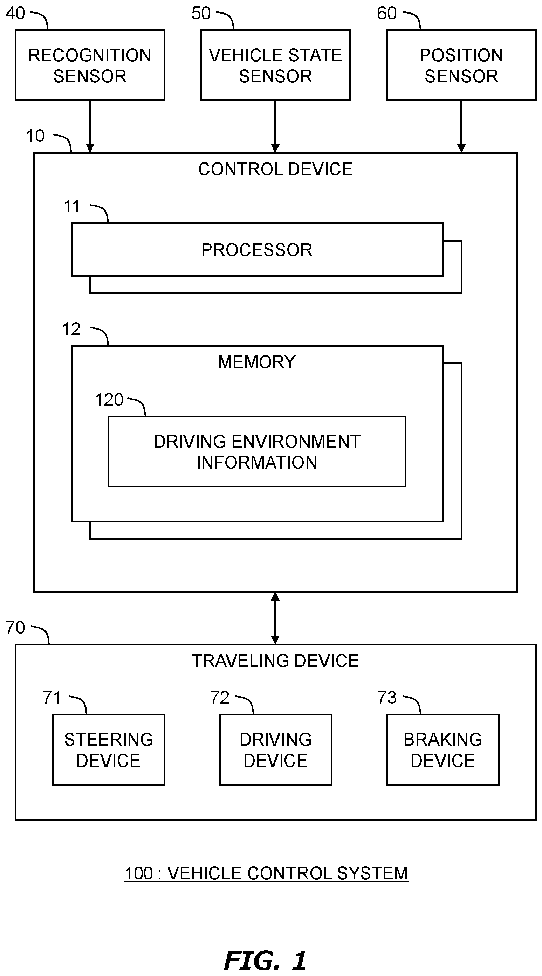

Fig. 1 is a block diagram showing a configuration example of a vehicle control system 100 according to a present embodiment. The vehicle control system 100 controls a vehicle. Typically, the vehicle control system 100 is mounted on the vehicle. Alternatively, at least a part of the vehicle control system 100 may be installed in an external device outside the vehicle to remotely control the vehicle. That is, the vehicle control system 100 may be dividedly installed in the vehicle and the external device.

The vehicle control system 100 includes a recognition sensor 40, a vehicle state sensor 50, a position sensor 60, a traveling device 70, and a control device 10.

The recognition sensor 40 is mounted on the vehicle and recognizes (detects) a situation around the vehicle. Examples of the recognition sensor 40 include a laser imaging detection and ranging (LIDAR), a camera, a radar, and a clearance sonar.

The vehicle state sensor 50 is mounted on the vehicle and detects a state of the vehicle. Examples of the vehicle state sensor 50 includes a vehicle speed sensor, an acceleration sensor, a yaw rate sensor, and a steering angle sensor.

The position sensor 60 is mounted on the vehicle and detects a position and a direction of the vehicle. As the position sensor 60, a Global Positioning System (GPS) sensor is exemplified.

The traveling device 70 includes a steering device 71, a driving device 72, and a braking device 73. The steering device 71 steers wheels of the vehicle. For example, the steering device 71 includes an electric power steering (EPS) device. The driving device 72 is a power source that generates a driving force. Examples of the driving device 72 include an engine, an electric motor, and an in-wheel motor. The braking device 73 generates a braking force.

The control device 10 controls a vehicle. The control device 10 includes one or more processors 11 (hereinafter simply referred to as a processor 11) and one or more memories 12 (hereinafter simply referred to as a memory 12). The processor 11 executes various processes. For example, the processor 11 includes a central processing unit (CPU). The memory 12 stores various kinds of information. Examples of the memory 12 include a volatile memory, a non-volatile memory, a hard disk drive (HDD), and a solid-state drive (SSD). By the processor 11 executing a control program, which is a computer program, various processes by the processor 11 (by the control device 10) are realized. The control program is stored in the memory 12 or recorded in a computer-readable storage medium. The control device 10 may include one or more electronic control units (ECUs). A part of the control device 10 may be an information processing device outside the vehicle. In that case, a part of the control device 10 communicates with the vehicle and remotely controls the vehicle.

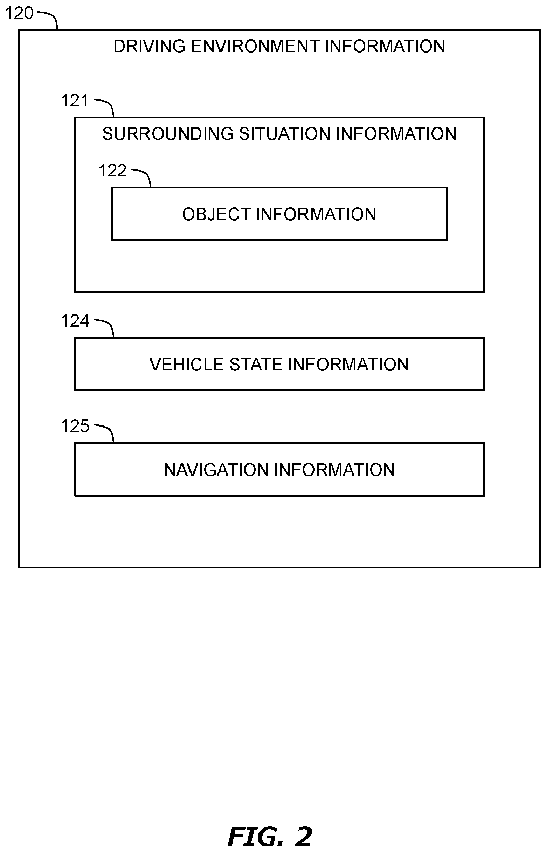

The processor 11 acquires driving environment information 120 indicating driving environment of the vehicle. The acquired driving environment information 120 is stored in the memory 12. Fig. 2 is a block diagram showing an example of the driving environment information 120. The driving environment information 120 includes surrounding situation information 121, vehicle state information 124, and navigation information 125.

The surrounding situation information 121 is information indicating a situation around the vehicle. The surrounding situation information 121 includes information acquired from the recognition sensor 40. For example, the surrounding situation information 121 includes image information captured by the camera. As another example, the surrounding situation information 121 may include point group information acquired from the LIDAR.

The surrounding situation information 121 further includes object information 122 about an object around the vehicle. Examples of the object around the vehicle include a pedestrian, another vehicle, a white line, a road structure, a characteristic object, and a fallen object. The object information 122 indicates a relative position and a relative speed of the object to the vehicle. For example, the relative position and the relative speed of the object can be acquired by recognizing the object based on the point group information obtained by the LIDAR. As another example, the relative position of the object can be calculated by recognizing and identifying the object by analyzing an image captured by the camera. The object information 122 may include a moving direction and a moving speed of the object.

The vehicle state information 124 is information indicating the state of the vehicle. Examples of the state of the vehicle include a vehicle speed, a yaw rate, lateral acceleration, and a steering angle. The processor 11 acquires the vehicle state information 124 from a result of the detection by the vehicle state sensor 50.

The navigation information 125 includes position information and map information. The position information indicates the position and the direction of the vehicle. The position information is acquired from the position sensor 60. The map information indicates arrangement of a lane, a shape of a road, and the like. The processor 11 acquires necessary map information of a specific area from a map database. The map database may be stored in a predetermined storage device mounted on the vehicle or may be stored in a management server outside the vehicle. In the latter case, the processor 11 communicates with the management server to acquire the necessary map information.

The processor 11 also executes vehicle travel control for controlling traveling of the vehicle. The vehicle travel control includes steering control, acceleration control, and deceleration control. The processor 11 executes the vehicle travel control by controlling the traveling device 70. More specifically, the processor 11 performs the steering control by outputting a steering control amount to the steering device 71 and controlling the steering device 71. The processor 11 performs the acceleration control by outputting a calculated acceleration control amount to the driving device 72 and controlling the driving device 72. Further, the processor 11 performs the deceleration control by outputting a deceleration control amount to the braking device 73 and controlling the braking device 73.

As the vehicle travel control, "autonomous driving control" and "driving support control" described below are exemplified.

### 2. Autonomous Driving Control and Driving Support Control

### 2-1. Autonomous Driving Control

The autonomous driving control is for controlling autonomous driving of the vehicle. As the autonomous driving, for example, so-called autonomous driving of level 3 or higher is assumed here. During operation of the autonomous driving of level 3 or higher, the driver does not necessarily have to fully concentrate on driving.

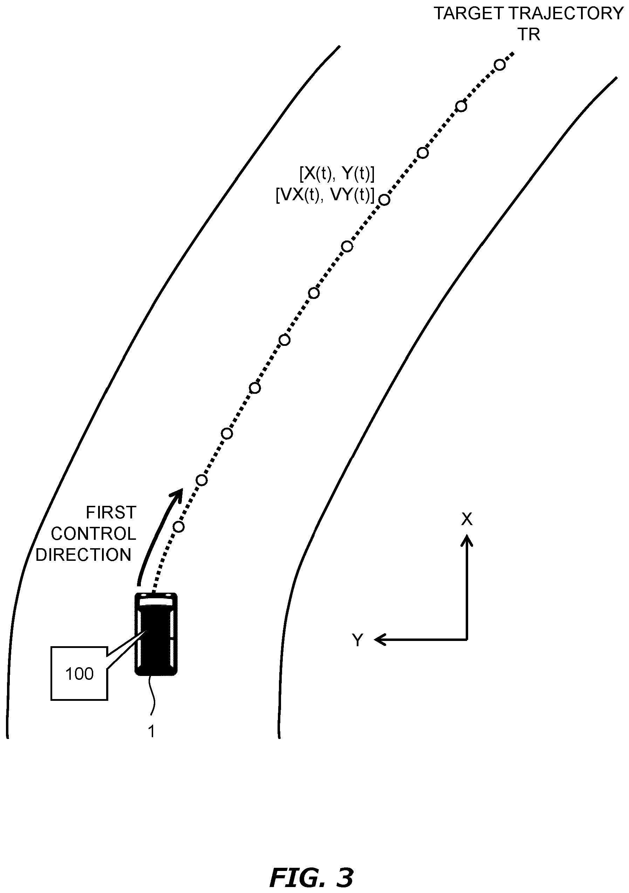

Fig. 3 is a schematic diagram for explaining the autonomous driving control. The vehicle control system 100 generates a traveling plan of the vehicle 1 based on the driving environment information 120. The traveling plan includes keeping a current traveling lane, changing lanes, avoiding an obstacle, and the like. Then, the vehicle control system 100 generates a target trajectory TR necessary for the vehicle 1 to travel in accordance with the travel plan. The target trajectory TR includes a target position [X (t), Y (t)] and a target speed [VX (t), VY (t)] of the vehicle 1. The target position [X (t), Y (t)] and the target speed [VX (t), VY (t)] are functions of time t.

The vehicle control system 100 performs the above-described vehicle travel control so that the vehicle 1 follows the target trajectory TR. Specifically, the vehicle control system 100 calculates a control amount necessary for the vehicle 1 to follow the target trajectory TR. For example, the vehicle control system 100 calculates a deviation (a lateral deviation, a yaw angle deviation, a speed deviation, or the like) between the vehicle 1 and the target trajectory TR and calculates control amounts for steering, acceleration, and deceleration of the vehicle 1 for reducing the deviation. Then, the vehicle control system 100 controls the traveling device 70 according to the control amounts.

A control direction for following the target trajectory TR for the autonomous driving, that is, the control direction of the vehicle 1 for the autonomous driving, is hereinafter referred to as a "first control direction". The control direction in a lateral direction, that is, the control direction relating to steering, is a left direction or a right direction. The control direction in a longitudinal direction, that is, the control direction relating to acceleration / deceleration, is an acceleration direction or a deceleration direction.

### 2-2. Driving Support Control

The driving support control is controlling at least one of steering, acceleration, and deceleration of the vehicle 1 for improving travel safety of the vehicle 1 or for stabilizing behavior of the vehicle 1. Examples of such driving support control include risk avoidance control, lane departure restriction control, vehicle stability control, and emergency brake. In the risk avoidance control, at least one of the steering control and the deceleration control is performed in order to reduce a risk of collision between the vehicle 1 and an object (for example, a peripheral vehicle or a pedestrian). The lane departure restriction control restrains the vehicle 1 from deviating from the traveling lane. The vehicle stability control restrains unstable behavior such as a vehicle spin. The emergency brake decelerates the vehicle 1 in order to avoid collision between the vehicle 1 and a peripheral object.

The driving support control does not always operate but operates in response to satisfaction of a predetermined operation condition. The vehicle control system 100 determines whether it is necessary to activate the driving support control or not, that is, whether the operation condition is satisfied or not, based on the driving environment information 120. When the operation condition is satisfied, the vehicle control system 100 executes the driving support control.

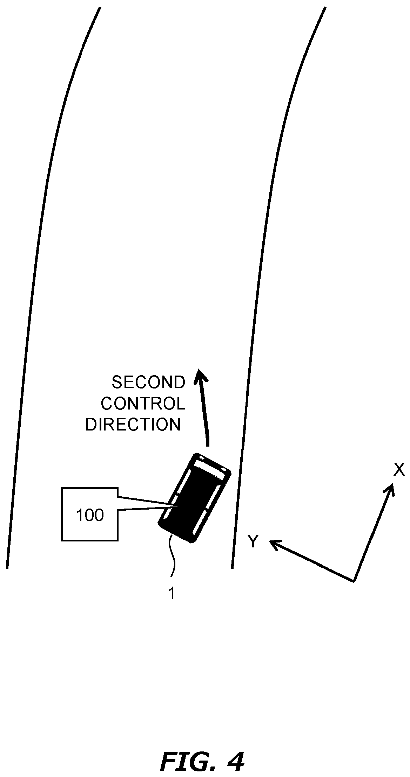

Fig. 4 is a schematic diagram for explaining the lane departure restriction control, which is an example of the driving support control. The vehicle control system 100 recognizes a white line around the vehicle 1 based on the surrounding situation information 121 (the object information 122) and determines whether the vehicle 1 is likely to deviate from the traveling lane or not. When a value indicating a possibility that the vehicle 1 deviates from the traveling lane exceeds a threshold value, the vehicle control system 100 determines that the lane departure restriction control is necessary, that is, determines that the operation condition of the lane departure restriction control is satisfied. For example, when a distance between the vehicle 1 and a nearby white line becomes less than a threshold value, the vehicle control system 100 determines that the operation condition of the lane departure restriction control is satisfied. In the lane departure restriction control, the vehicle control system 100 automatically controls steering of the vehicle 1 so that the vehicle 1 returns to the center of the lane. More specifically, the vehicle control system 100 calculates the steering control amount for making the vehicle 1 return to the center of the lane. Then, the vehicle control system 100 controls the steering device 71 in accordance with the steering control amount.

As another example, the risk avoidance control is as follows. The vehicle control system 100 recognizes an object (for example, a peripheral vehicle or a pedestrian) in front of the vehicle 1 based on the surrounding situation information 121 (the object information 122). Further, the vehicle control system 100 calculates a value indicating a collision possibility between the vehicle 1 and the object based on the object information 122 and the vehicle state information 124 (the vehicle speed, and the like). When the value of the collision possibility is equal to or greater than a threshold value, the vehicle control system 100 determines that the risk avoidance control is necessary, that is, determines that the operation condition of the risk avoidance control is satisfied. In the risk avoidance control, the vehicle control system 100 generates a target trajectory for reducing a risk of collision against the object. This target trajectory requires at least one of the steering control and the deceleration control. Then, the vehicle control system 100 calculates a control amount necessary for the vehicle 1 to follow the target trajectory and controls the traveling device 70 in accordance with the control amount.

Hereinafter a control direction of the vehicle 1 for the driving support control is referred to as a "second control direction". The control direction in the lateral direction, that is, the control direction relating to steering is the left direction or the right direction. The control direction in the longitudinal direction, that is, the control direction relating to acceleration / deceleration is the acceleration direction or the deceleration direction.

### 2-3. Example of Functional Configuration

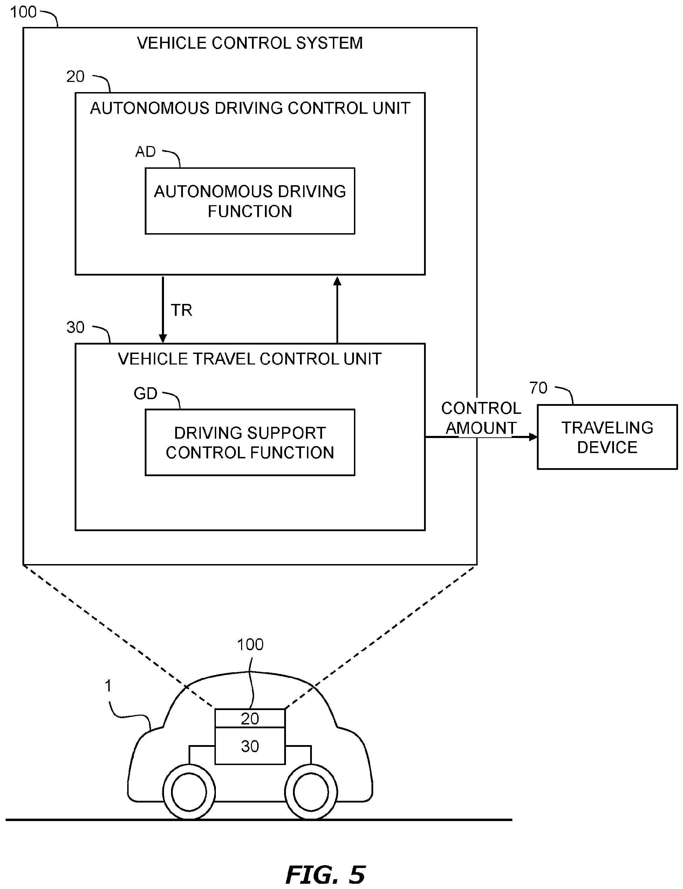

Fig. 5 is a block diagram showing an example of a functional configuration of the vehicle control system 100. The vehicle control system 100 includes an autonomous driving control unit 20 and a vehicle travel control unit 30 as functional blocks. The autonomous driving control unit 20 and the vehicle travel control unit 30 are realized by the processor 11 executing the control program. The autonomous driving control unit 20 and the vehicle travel control unit 30 may be realized by physically different processors 11 or may be realized by the same processor 11. When the autonomous driving control unit 20 and the vehicle travel control unit 30 are included in the physically different processors 11, the processors 11 exchange necessary information through communication.

The autonomous driving control unit 20 includes an autonomous driving function AD for the autonomous driving control described in above Section 2-1. The autonomous driving control unit 20 (the autonomous driving function AD) generates the target trajectory TR for autonomous driving. Then, the autonomous driving control unit 20 outputs the generated target trajectory TR to the vehicle travel control unit 30.

The vehicle travel control unit 30 includes a function of the vehicle travel control described above. That is, the vehicle travel control unit 30 calculates the control amounts for controlling traveling (steering, acceleration, and deceleration) of the vehicle 1 and controls the traveling device 70 in accordance with the control amounts.

For example, during operation of the autonomous driving control, the vehicle travel control unit 30 receives the target trajectory TR from the autonomous driving control unit 20. Then, the vehicle travel control unit 30 calculates the control amount necessary for the vehicle 1 to follow the target trajectory TR and controls the traveling device 70 according to the control amount.

The vehicle travel control unit 30 further includes a driving support control function GD for the driving support control described in above Section 2-2. The driving support control function GD determines whether it is necessary to activate the driving support control or not, that is, whether the operation condition is satisfied or not, based on the driving environment information 120. When the operation condition is satisfied, the driving support control function GD calculates the control amount for the driving support control.

A case where the operation condition of the driving support control is satisfied during manual driving is as follows. The driving support control function GD calculates the control amount for the driving support control. The vehicle travel control unit 30 controls the traveling device 70 in accordance with the control amount output from the driving support control function GD. Therefore, effect of the driving support control can be obtained.

A case where the operation condition of the driving support control is satisfied while the autonomous driving control is performed is as follows. The vehicle travel control unit 30 receives the target trajectory TR for the autonomous driving from the autonomous driving control unit 20 and also receives the control amount for the driving support control from the driving support control function GD. The vehicle travel control unit 30 performs mediation between the target trajectory TR for the autonomous driving and the control amount for the driving support control and determines a final control amount. Although various policies can be considered for the mediation, there is no limitation in the present embodiment. The vehicle travel control unit 30 controls the traveling device 70 in accordance with the final control amount.

### 2-4. Start of Autonomous Driving Mode

An "autonomous driving mode" is a mode in which the vehicle travel control (the autonomous driving control) is performed in accordance with the target trajectory TR generated by the autonomous driving control unit 20. In order to request to start the autonomous driving mode, the autonomous driving control unit 20 outputs an "autonomous driving start request", which is a signal that requests to start the autonomous driving, to the vehicle travel control unit 30.

The autonomous driving control unit 20 outputs the autonomous driving start request at timing as follows, for example. As one example, the occupant of the vehicle 1 inputs an instruction to start the autonomous driving mode into the autonomous driving control unit 20. As another example, an instruction to start the autonomous driving mode may be transmitted from a terminal in a remote place to the autonomous driving control unit 20. The autonomous driving control unit 20 that has received the instruction to start the autonomous driving mode performs determination about a predetermined condition for starting the autonomous driving mode and, when the condition is satisfied, outputs the autonomous driving start request.

Before the autonomous driving mode is started, the autonomous driving control unit 20 may provisionally generate the target trajectory TR. In this case, the autonomous driving control unit 20 may output the target trajectory TR to the vehicle travel control unit 30 together with the autonomous driving start request.

The vehicle travel control unit 30 receives the autonomous driving start request from the autonomous driving control unit 20. In response to the autonomous driving start request, the vehicle travel control unit 30 determines whether to accept the autonomous driving start request or not, that is, whether to permit starting the autonomous driving mode or not. In a case where the autonomous driving start request is accepted, that is, in a case where starting the autonomous driving mode is permitted, the vehicle travel control unit 30 notifies the autonomous driving control unit 20 of the fact. Then, the vehicle control system 100 starts the autonomous driving mode.

Here, a case in which the driving support control is activated before the autonomous driving mode is started and the autonomous driving start request is outputted during operation of the driving support control is considered. If the vehicle travel control unit 30 unexceptionally permits starting the autonomous driving mode, the control amount output to the traveling device 70 becomes a control amount calculated based on the target trajectory TR. In other words, the control amount for the driving support control is not output to the traveling device 70, and a control amount to be output is replaced with the control amount calculated based on the target trajectory TR. It means that the effect of the driving support control suddenly disappears during the operation of the driving support control. There is a possibility that it may cause the occupant of the vehicle 1 to feel uneasy.

Therefore, the vehicle control system 100 according to the present embodiment is configured not to unexceptionally start the autonomous driving mode even when receiving the autonomous driving start request during operation of the driving support control. Since the autonomous driving mode is not unexceptionally started, the effect of the driving support control continues at least to some extent. Since the effect of the driving support control does not suddenly disappear, uneasy feeling of the occupant is reduced.

Hereinafter, various embodiments relating to the start of the autonomous driving mode is described.

### 3. First Embodiment

The first embodiment is useful for understanding the invention. In the first embodiment, when receiving the autonomous driving start request during operation of the driving support control, the vehicle control system 100 unexceptionally prohibits starting the autonomous driving mode.

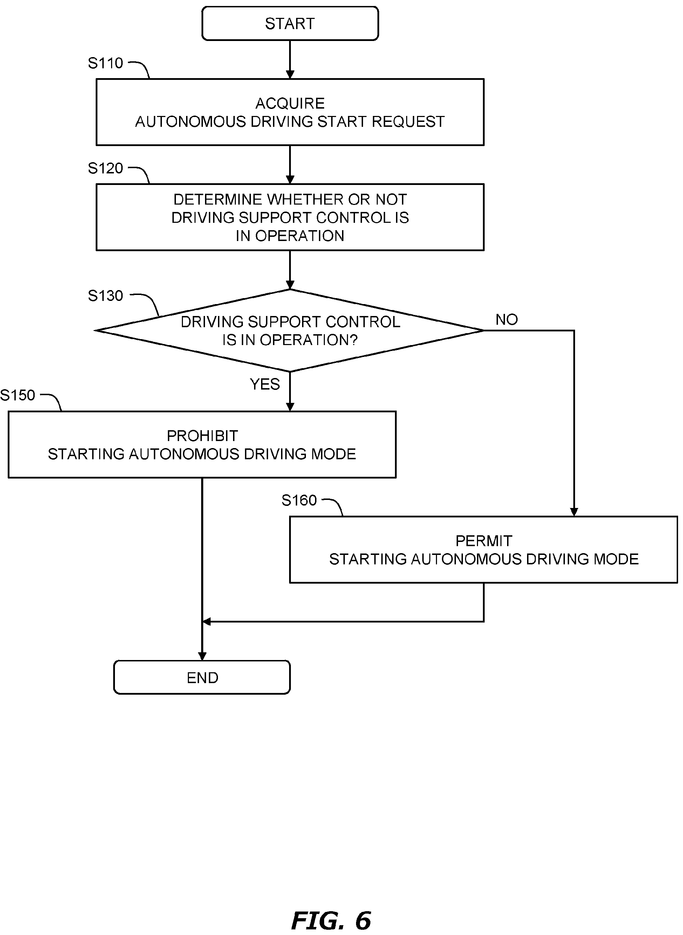

Fig. 6 is a flowchart showing an example of processing according to the first embodiment. The processing shown in Fig. 6 is executed by the vehicle travel control unit 30. This processing is realized by the processor 11 executing the control program.

In Sep S110, the vehicle travel control unit 30 (the processor 11) acquires the autonomous driving start request. The autonomous driving start request is output from the autonomous driving control unit 20. After the processor 11 acquires the autonomous driving start request, the processing proceeds to Step S120.

In Step S120 and Step S130, the vehicle travel control unit 30 determines whether the driving support control is in operation or not. When the operation condition is satisfied, the driving support control becomes in operation (is activated).

When the driving support control is in operation (Step S130; Yes), the processing proceeds to Step S150. When the driving support control is not in operation (Step S130; No), the processing proceeds to Step S160.

In Step S150, the vehicle travel control unit 30 prohibits starting the autonomous driving mode. After starting the autonomous driving mode is prohibited, the processing ends. After the processing ends, the control amount for the driving support control is continuously output to the traveling device 70.

In Step S160, the vehicle travel control unit 30 permits starting the autonomous driving mode. After starting the autonomous driving mode is permitted and the autonomous driving mode is set as the driving mode of vehicle 1, the processing ends. As a result of permission to start the autonomous driving mode, the control amount calculated based on the target trajectory TR that is output from the autonomous driving control unit 20 is output to the traveling device 70.

As described above, in the first embodiment, when receiving the autonomous driving start request during operation of the driving support control, the vehicle control system 100 (the vehicle travel control unit 30) unexceptionally prohibits starting the autonomous driving mode. Accordingly, the effect of the driving support control can be continuously obtained. In addition, it is possible to prevent uneasy feeling of the occupant due to the control amount for the driving support control not being transmitted to the traveling device 70.

### 4. Second Embodiment

According to the second embodiment, when receiving the autonomous driving start request during operation of the driving support control, the vehicle control system 100 determines whether a "permission condition" is satisfied or not. Then, the vehicle control system 100 permits starting the autonomous driving mode only when the permission condition is satisfied. A specific example of the permission condition will be described below.

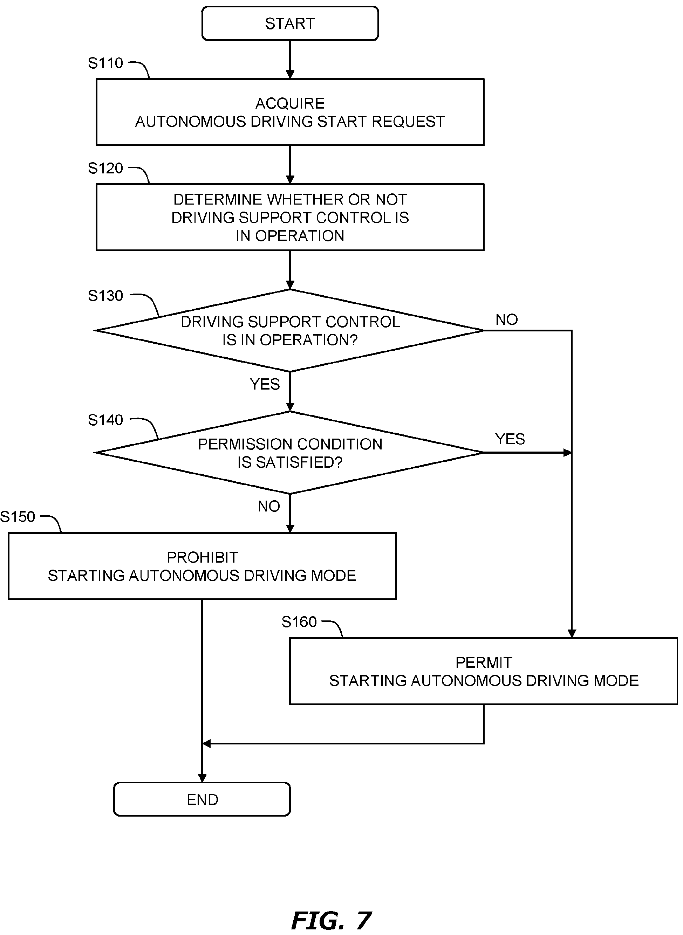

Fig. 7 is a flowchart showing an example of processing according to the second embodiment.

Processes of Step S110 to Step S130 in Fig.7 are the same as those in Fig. 6. However, in Step S130, when the driving support control is in operation (Step S130; Yes), the processing proceeds to Step S140.

In Step S140, the vehicle travel control unit 30 determines whether the permission condition is satisfied or not. If the permission condition is not satisfied (Step S140: No), the processing proceeds to Step S150. If the permission condition is satisfied (Step S140: Yes), the processing proceeds to Step S160.

Processes of Step S150 and Step S160 in Fig.7 are the same as those in Fig. 6. That is, starting the autonomous driving mode is prohibited in Step S150, and starting the autonomous driving mode is permitted in Step S160.

### 5. Third Embodiment

The third embodiment is useful for understanding the invention and is a specific example of the second embodiment. In the third embodiment, the permission condition is that the first control direction (see Fig. 3) for the autonomous driving control is consistent with the second control direction (see Fig. 4) for the driving support control.

Each control direction includes at least one of the lateral control direction (steering direction) and the longitudinal control direction (acceleration / deceleration direction). For convenience, the lateral control direction and the longitudinal control direction included in the first control direction for the autonomous driving control are referred to as a first lateral control direction and a first longitudinal control direction, respectively. Similarly, the lateral control direction and the longitudinal control direction included in the second control direction for the driving support control are referred to as a second lateral control direction and a second longitudinal control direction, respectively. In a case where the second control direction includes both the second lateral control direction and the second longitudinal control direction, if the first lateral control direction is consistent with the second lateral control direction and the first longitudinal control direction is consistent with the second longitudinal control direction, it is determined that the first control direction is consistent with the second control direction. In a case where the second control direction includes only the second lateral control direction, if the first lateral control direction is consistent with the second lateral control direction, it is determined that the first control direction is consistent with the second control direction (regardless of the first longitudinal control direction). In a case where the second control direction includes only the second longitudinal control direction, if the first longitudinal control direction is consistent with the second longitudinal control direction, it is determined that the first control direction is consistent with the second control direction (regardless of the first lateral control direction). That is, if at least the first control direction covers the second control direction, it is determined that the first control direction is consistent with the second control direction.

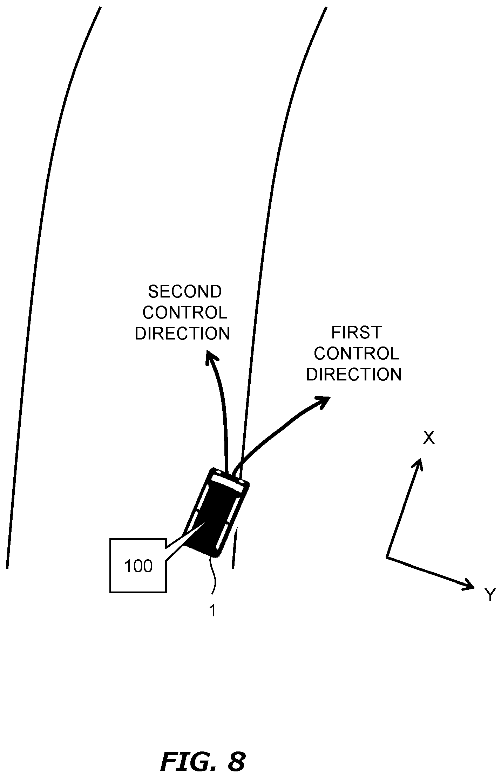

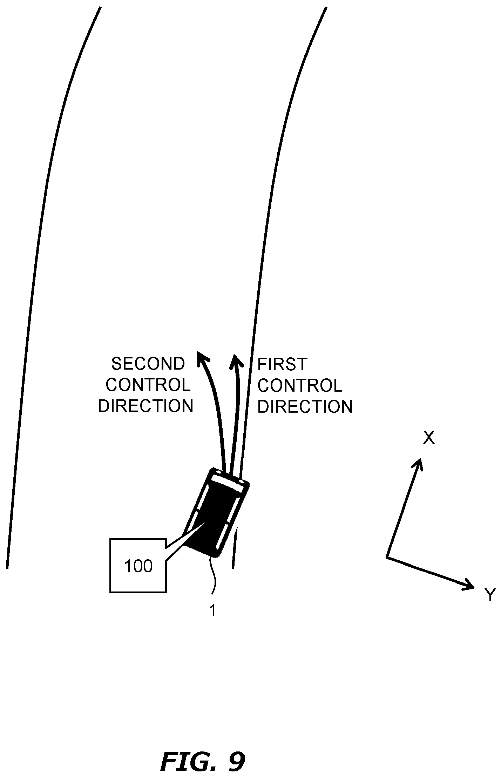

Figs. 8 and 9 show examples of a scene where the first control direction is not consistent with the second control direction and a scene where the first control direction is consistent with the second control direction, respectively. For simplicity, only the lateral control direction (the steering direction) is considered in the examples of Figs. 8 and 9. In the example of Fig. 8, since the second control direction is the left direction while the first control direction is the right direction, it is determined that the first control direction is not consistent with the second control direction. On the other hand, in the example of Fig. 9, since both the first control direction and the second control direction are the left directions, it is determined that the first control direction is consistent with the second control direction.

In the third embodiment, which is useful for understanding the invention, the autonomous driving control unit 20 provisionally generates the target trajectory TR before starting the autonomous driving mode, and outputs the target trajectory TR to the vehicle travel control unit 30 together with the autonomous driving start request. The vehicle travel control unit 30 can figure out the first control direction based on the provisionally generated target trajectory TR.

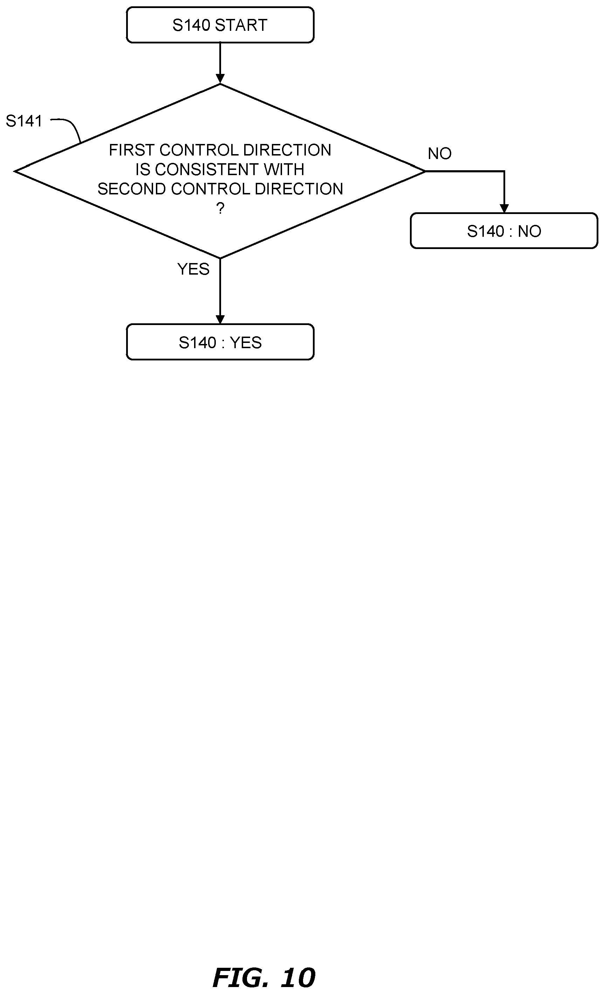

Fig. 10 is a flowchart showing a process of Step S140 in the third embodiment. The other flow of processing is the same as the flowchart of Fig. 7.

In Step S141, the vehicle travel control unit 30 determines whether the first control direction is consistent with the second control direction or not. When the first control direction is consistent with the second control direction (Step S141; Yes), it is determined that the permission condition is satisfied (Step S140; Yes). On the other hand, when the first control direction is not consistent with the second control direction (Step S141; No), it is determined that the permission condition is not satisfied (Step S140; No).

If the target trajectory TR is not output from the autonomous driving control unit 20, the vehicle travel control unit 30 determines that the first control direction is not consistent with the second control direction.

As described above, in the third embodiment, the permission condition is that the first control direction is consistent with the second control direction, and starting the autonomous driving mode is permitted only when the first control direction is consistent with the second control direction. When the first control direction is consistent with the second control direction, it is expected that an effect equivalent to that of the driving support control is obtained by the autonomous driving control. Accordingly, even if starting the autonomous driving mode is permitted, it is expected that a change in behavior of the vehicle 1 is small and the occupant feels a little sense of uneasy. Therefore, since starting the autonomous driving mode is permitted in such a situation, it is possible to smoothly start the autonomous driving mode. In addition, by prohibiting starting the autonomous driving mode in a situation where the first control direction is not consistent with the second control direction and it is expected that an influence on the behavior of the vehicle 1 becomes large, it is possible to reduce uneasy feeling of the occupant.

### 6. Fourth Embodiment

The fourth embodiment is useful for understanding the invention and is a specific example of the second embodiment. In the fourth embodiment, the permission condition is that a predetermined time elapses after the vehicle travel control unit 30 receives the autonomous driving start request.

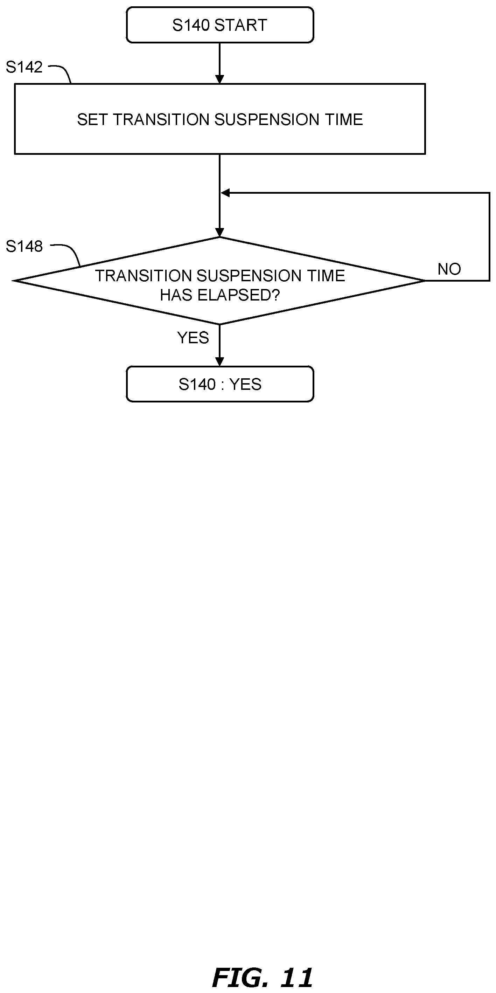

Fig. 11 is a flowchart showing a process of Step S140 in the fourth embodiment. The other flow of processing is the same as the flowchart of Fig. 7.

In Step S142, the vehicle travel control unit 30 sets a transition suspension time. The transition suspension time is a time for suspending transition to the autonomous driving mode and is set as a time from when the vehicle travel control unit 30 receives the autonomous driving start request. Here, the transition suspension time is a predetermined constant time. The transition suspension time may be set to an arbitrary time. For example, a time approximately equal to a time during which the driving support control is assumed to be in operation may be set. For example, in a case where the driving support control is the lane departure restriction control, a time during which the driving support control is in operation is assumed to be several seconds to ten and several seconds. Therefore, for example, the transition suspension time may be set to about several seconds to ten and several seconds (for example, 15 seconds). Alternatively, in a case where the driving support control is emergency brake, a time during which the driving support control is in operation is assumed to be about several seconds. Therefore, for example, the transition suspension time may be set to about several seconds (for example, 2 seconds). By setting the transition suspension time to a time approximately equal to a time during which the driving support control is in operation, it is possible to smoothly change to the autonomous driving mode while ensuring the function of the driving support control. The transition suspension time may be a time uniformly determined for all the driving support control or may be determined to be a different time depending on the type of the driving support control which is in operation. After the transition suspension time is set, the processing proceeds to Step S148.

In Step S148, the vehicle travel control unit 30 determines whether the transition suspension time has elapsed or not. If the transition suspension time has elapsed (Step S148; Yes), it is determined that the permission condition is satisfied (Step S140; Yes). On the other hand, if the transition suspension time has not elapsed (Step S148; No), the processing returns to Step S148.

In the fourth embodiment, the transition suspension time is set as described above, and the permission condition is that the transition suspension time elapses. Since the driving support control continues at least during the transition suspension time, it is considered that an effect of the driving support control (risk avoidance, lane departure avoidance, vehicle stability assurance, or the like) are sufficiently achieved during the transition suspension time. Therefore, there are no problems even if starting the autonomous driving mode is permitted thereafter. Since starting the autonomous driving mode is permitted after a predetermined time elapses while the autonomous driving mode is prohibited from unexceptionally starting, it is possible to smoothly start the autonomous driving mode while reducing uneasy feeling of the occupant.

### 7. Fifth Embodiment

The fifth embodiment is also a specific example of the second embodiment. Also in the fifth embodiment, the permission condition is that the transition suspension time elapses.

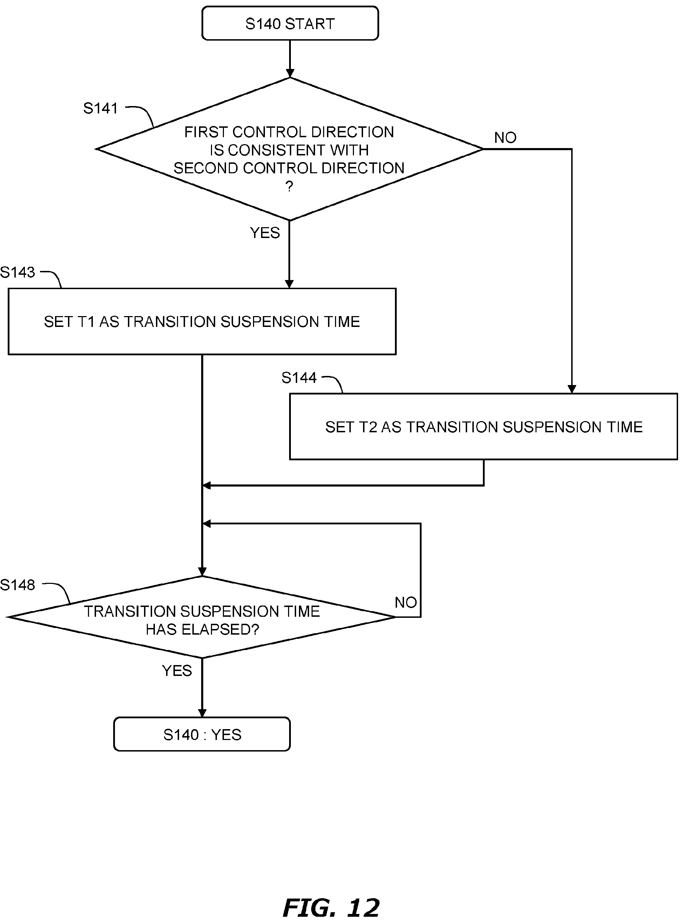

Fig. 12 is a flowchart showing a process of Step S140 in the fifth embodiment. The other flow of processing is the same as the flowchart of Fig. 7.

In Step S141, the vehicle travel control unit 30 determines whether the first control direction is consistent with the second control direction or not. It is the same as the above-described third embodiment how this determination is performed. When the first control direction is consistent with the second control direction (Step S141; Yes), the processing proceeds to Step S143. On the other hand, when the first control direction is not consistent with the second control direction (Step S141; No), the processing proceeds to Step S144.

In Step S143, the vehicle travel control unit 30 sets a first time T1 as the transition suspension time. The first time T1 is a time shorter than a second time T2, which is set in Step S144 described below. The first time T1 may be 0 seconds. In a case where the second time T2 is determined uniformly for all the driving support control, the first time T1 is also set to a uniformly determined time for all the driving support controls. In a case where the second time T2 is set to a time varying depending on the type of the driving support control in operation, the first time T1 is also set to a time varying depending on the type of the driving support control in operation. After the first time T1 is set as the transition suspension time, the processing proceeds to Step S148.

In Step S144, the vehicle travel control unit 30 sets the second time T2 as the transition suspension time. The second time T2 is a time longer than the first time T1. The second time T2 may be, for example, the same time as the transition suspension time set in Step S142 of Fig. 11. In addition, similarly to Step S142, the second time T2 may be a time uniformly determined for all the driving support controls or may be set to a time varying depending on the type of the driving support control in operation.

A process of Step S148 in Fig.12 is the same as the process of Step S148 in Fig. 11. In a case where the first time T1 is set as the transition suspension time and the first time T1 is 0 seconds, it is immediately determined that the permission condition is satisfied.

In the fifth embodiment, starting the autonomous driving mode is permitted after the transition suspension time elapses while preventing the autonomous driving mode from unexceptionally starting. Accordingly, it is possible to smoothly start the autonomous driving mode while reducing uneasy feeling of the occupant. In addition, in the fifth embodiment, the transition suspension time is set to a shorter time when the first control direction is consistent with the second control direction. When the first control direction is consistent with the second control direction, it is expected that the occupant feels less sense of uneasy even if the autonomous driving mode starts at an earlier timing. Since starting the autonomous driving mode is permitted earlier in such a situation, it is possible to start the autonomous driving mode in a timely manner.

### 8. Sixth Embodiment

The sixth embodiment is a modified example of the fifth embodiment. The sixth embodiment is the same as the fifth embodiment in terms of the permission condition being a condition that the transition suspension time elapses. In addition, according to the sixth embodiment, the transition suspension time is shortened depending on a subsequent situation.

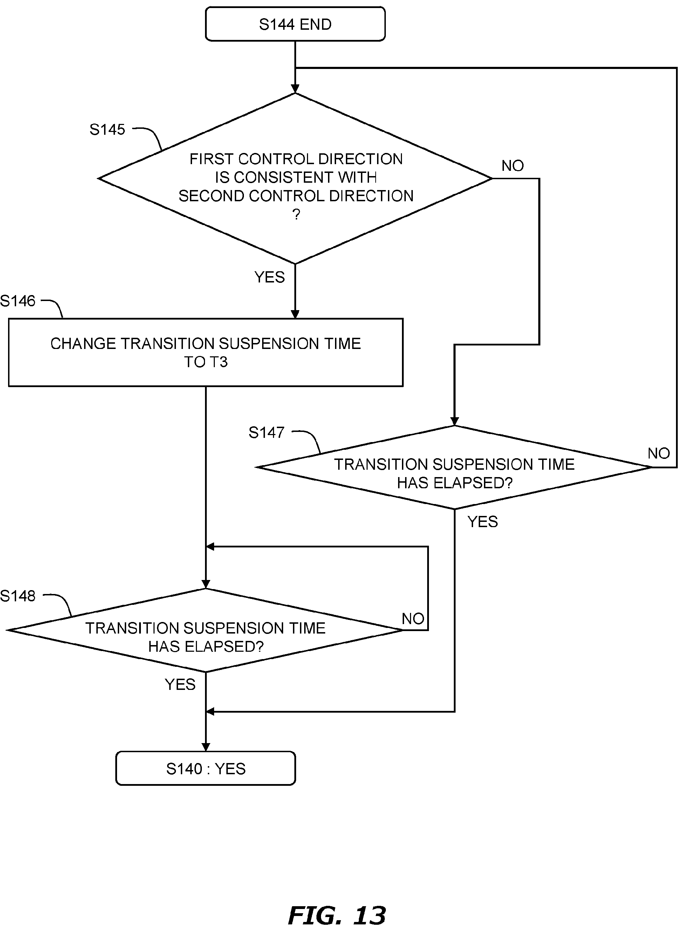

Fig. 13 is a flowchart showing a process of Step S140 in the sixth embodiment. Since processes of Step S141, Step S143, and Step S144 in Fig. 13 are the same as those in Fig. 12, they are omitted.

After the second time T2 is set as the transition suspension time in Step S144, the processing proceeds to Step S145. In Step S145, the vehicle travel control unit 30 determines whether the first control direction is consistent with the second control direction or not. It is the same as the third embodiment described above how this determination is performed. If the first control direction is consistent with the second control direction (Step S145; Yes), the processing proceeds to Step S146. On the other hand, if the first control direction is not consistent with the second control direction (Step S145; No), the processing proceeds to Step S147.

In Step S146, the vehicle travel control unit 30 changes the transition suspension time to a third time T3. The third time T3 is a time shorter than the second time T2. The third time T3 may be the same time as the first time T1. The third time T3 may be 0 seconds.

In Step S147, the vehicle travel control unit 30 determines whether the transition suspension time has elapsed or not. If the transition suspension time has elapsed (Step S147; Yes), it is determined that the permission condition is satisfied (Step S140; Yes). On the other hand, if the transition suspension time has not elapsed (Step S147; No), the processing returns to Step S145.

In Step S148, the vehicle travel control unit 30 determines whether the transition suspension time has elapsed or not. If the transition suspension time has elapsed (Step S148; Yes), it is determined that the permission condition is satisfied (Step S140; Yes). On the other hand, if the transition suspension time has not elapsed (Step S148; No), the processing returns to Step S148. In a case where a longer time than the transition suspension time has already elapsed at the time of the determination in Step S148, it is immediately determined that the permission condition is satisfied.

In the sixth embodiment, similarly to the fifth embodiment, the transition suspension time depending on the first control direction and the second control direction is set. Further, in the sixth embodiment, the permission condition is that the transition suspension time elapses. Accordingly, it is possible to smoothly and timely start the autonomous driving mode and reduce uneasy feeling of the occupant. In addition, when the first control direction becomes consistent with the second control direction during operation of the driving support control, the transition suspension time is shortened. Accordingly, it is possible to prevent a time for waiting for the start of the autonomous driving mode from becoming redundant.

## Claims

1. A vehicle control system (100) for controlling a vehicle (1) capable of autonomous driving, the vehicle control system (100) comprising one or more processors (11) configured to:
when an operation condition is satisfied, perform driving support control that controls at least one of steering, acceleration, and deceleration of the vehicle (1) for improving travel safety of the vehicle (1) or for stabilizing behavior of the vehicle (1); and
when receiving an autonomous driving start request to start the autonomous driving during operation of the driving support control, permit starting the autonomous driving only when a permission condition is satisfied, wherein the permission condition is that a transition suspension time elapses after the autonomous driving start request is received;
**characterised in that** the one or more processors (11) are further configured to:
when receiving the autonomous driving start request during operation of the driving support control, determine whether or not a first control direction for the autonomous driving is consistent with a second control direction for the driving support control;
set a first time as the transition suspension time when the first control direction is consistent with the second control direction; and
set a second time as the transition suspension time when the first control direction is not consistent with the second control direction,
wherein the second time is longer than the first time.

2. The vehicle control system (100) according to claim 1, wherein
the one or more processors (11) are further configured to change the transition suspension time to a third time when the first control direction becomes consistent with the second control direction after setting the second time as the transition suspension time and during operation of the driving support control, and
the third time is shorter than the second time.

3. A method for controlling a vehicle (1) capable of autonomous driving, the method comprising:
when an operation condition is satisfied, performing driving support control that controls at least one of steering, acceleration, and deceleration of the vehicle (1) for improving travel safety of the vehicle (1) or for stabilizing behavior of the vehicle (1); and
when receiving an autonomous driving start request to start the autonomous driving during operation of the driving support control, permitting starting the autonomous driving only when a permission condition is satisfied;
wherein the permission condition is that a transition suspension time elapses after the autonomous driving start request is received;
**characterised in that** the method further comprises:
when receiving the autonomous driving start request during operation of the driving support control, determining whether or not a first control direction for the autonomous driving is consistent with a second control direction for the driving support control;
setting a first time as the transition suspension time when the first control direction is consistent with the second control direction; and
setting a second time as the transition suspension time when the first control direction is not consistent with the second control direction,
wherein the second time is longer than the first time.

4. The method of claim 3, wherein the method further comprises:
changing the transition suspension time to a third time when the first control direction becomes consistent with the second control direction after setting the second time as the transition suspension time and during operation of the driving support control,
wherein the third time is shorter than the second time.

## Patentansprüche

1. Fahrzeugsteuerungssystem (100) zum Steuern eines Fahrzeugs (1), das in der Lage ist, autonom zu fahren, wobei das Fahrzeugsteuerungssystem (100) einen oder mehrere Prozessoren (11) umfasst, die für Folgendes konfiguriert sind:
wenn eine Betriebsbedingung erfüllt ist, Durchführen von Fahrunterstützungssteuerung, die mindestens eines aus Lenken, Beschleunigen und Verlangsamen des Fahrzeugs (1) steuert, zum Verbessern von Fahrsicherheit des Fahrzeugs (1) oder zum Stabilisieren des Verhaltens des Fahrzeugs (1); und
wenn eine Startanforderung für autonomes Fahren empfangen wird, um autonomes Fahren während des Betriebs der Fahrunterstützungssteuerung zu starten, Zulassen des Starts des autonomen Fahrens nur, wenn eine Erlaubnisbedingung erfüllt ist, wobei die Erlaubnisbedingung ist, dass eine Übergangssperrzeit vergeht, nachdem die Startanforderung für autonomes Fahren empfangen wird;
**dadurch gekennzeichnet, dass** der eine oder die mehreren Prozessoren (11) ferner für Folgendes konfiguriert sind:
wenn die Startanforderung für autonomes Fahren während des Betriebs der Fahrunterstützungssteuerung empfangen wird, Bestimmen, ob eine erste Steuerungsrichtung für das autonome Fahren mit einer zweiten Steuerungsrichtung für die Fahrunterstützungssteuerung übereinstimmt oder nicht;
Festlegen einer ersten Zeit als die Übergangssperrzeit, wenn die erste Steuerungsrichtung mit der zweiten Steuerungsrichtung übereinstimmt; und
Festlegen einer zweiten Zeit als die Übergangssperrzeit, wenn die erste Steuerungsrichtung nicht mit der zweiten Steuerungsrichtung übereinstimmt,
wobei die zweite Zeit länger als die erste Zeit ist.

2. Fahrzeugsteuerungssystem (100) nach Anspruch 1, wobei
der eine oder die mehreren Prozessoren (11) ferner konfiguriert sind, um die Übergangssperrzeit zu einer dritten Zeit zu verändern, wenn die erste Steuerungsrichtung mit der zweiten Steuerungsrichtung übereinstimmend wird, nachdem die zweite Zeit als die Übergangssperrzeit festgelegt wird, und während des Betriebs der Fahrunterstützungssteuerung, und
die dritte Zeit kürzer als die zweite Zeit ist.

3. Verfahren zum Steuern eines Fahrzeugs (1), das in der Lage ist, autonom zu fahren, wobei das Verfahren Folgendes umfasst:
wenn eine Betriebsbedingung erfüllt ist, Durchführen von Fahrunterstützungssteuerung, die mindestens eines aus Lenken, Beschleunigen und Verlangsamen des Fahrzeugs (1) steuert, zum Verbessern von Fahrsicherheit des Fahrzeugs (1) oder zum Stabilisieren des Verhaltens des Fahrzeugs (1); und
wenn eine Startanforderung für autonomes Fahren empfangen wird, um das autonome Fahren während des Betriebs der Fahrunterstützungssteuerung zu starten, Zulassen des Starts des autonomen Fahrens nur, wenn eine Erlaubnisbedingung erfüllt ist;
wobei die Erlaubnisbedingung ist, dass eine Übergangssperrzeit vergeht, nachdem die Startanforderung für autonomes Fahren empfangen wird;
**dadurch gekennzeichnet, dass** das Verfahren ferner Folgendes umfasst:
wenn die Startanforderung für autonomes Fahren während des Betriebs der Fahrunterstützungssteuerung empfangen wird, Bestimmen, ob eine erste Steuerungsrichtung für das autonome Fahren mit einer zweiten Steuerungsrichtung für die Fahrunterstützungssteuerung übereinstimmt oder nicht;
Festlegen einer ersten Zeit als die Übergangssperrzeit, wenn die erste Steuerungsrichtung mit der zweiten Steuerungsrichtung übereinstimmt; und
Festlegen einer zweiten Zeit als die Übergangssperrzeit, wenn die erste Steuerungsrichtung nicht mit der zweiten Steuerungsrichtung übereinstimmt,
wobei die zweite Zeit länger als die erste Zeit ist.

4. Verfahren nach Anspruch 3, wobei das Verfahren ferner Folgendes umfasst:
Verändern der Übergangssperrzeit zu einer dritten Zeit, wenn die erste Steuerungsrichtung mit der zweiten Steuerungsrichtung übereinstimmend wird, nachdem die zweite Zeit als die Übergangssperrzeit festgelegt wird, und während des Betriebs der Fahrunterstützungssteuerung,
wobei die dritte Zeit kürzer als die zweite Zeit ist.

## Revendications

1. Système de commande de véhicule (100) pour commander un véhicule (1) capable de conduite autonome, le système de commande de véhicule (100) comprenant un ou plusieurs processeurs (11) conçus pour :
lorsqu'une condition d'exploitation est remplie, réaliser une commande d'assistance à la conduite qui commande la direction, l'accélération et/ou la décélération du véhicule (1) afin d'améliorer la sécurité en déplacement du véhicule (1) ou de stabiliser le comportement du véhicule (1), et
lors de la réception d'une demande de démarrage de conduite autonome pour démarrer la conduite autonome pendant l'exploitation sous commande d'assistance à la conduite, autoriser le démarrage de la conduite autonome uniquement lorsqu'une condition d'autorisation est remplie, ladite condition d'autorisation étant qu'un temps de suspension de transition se soit écoulé après la réception de la demande de démarrage de conduite autonome ;
**caractérisé en ce que** le ou les processeurs (11) sont en outre conçus pour :
lors de la réception de la demande de démarrage de conduite autonome pendant l'exploitation sous commande d'assistance à la conduite, déterminer si une première direction de commande pour la conduite autonome est cohérente avec une deuxième direction de commande pour la commande d'assistance à la conduite,
définir un premier temps comme temps de suspension de transition lorsque la première direction de commande est cohérente avec la deuxième direction de commande, et
définir un deuxième temps comme temps de suspension de transition lorsque la première direction de commande n'est pas cohérente avec la deuxième direction de commande,
le deuxième temps étant plus long que le premier temps.

2. Système de commande de véhicule (100) selon la revendication 1, dans lequel
le ou les processeurs (11) sont en outre conçus pour modifier le temps de suspension de transition en un troisième temps lorsque la première direction de commande devient cohérente avec la deuxième direction de commande après avoir défini le deuxième temps comme temps de suspension de transition et pendant l'exploitation sous commande d'assistance à la conduite,
le troisième temps étant plus court que le deuxième temps.

3. Procédé de commande d'un véhicule (1) capable de conduite autonome, le procédé comprenant :
lorsqu'une condition d'exploitation est remplie, la réalisation d'une commande d'assistance à la conduite qui commande la direction, l'accélération et/ou la décélération du véhicule (1) afin d'améliorer la sécurité en déplacement du véhicule (1) ou de stabiliser le comportement du véhicule (1), et
lors de la réception d'une demande de démarrage de conduite autonome pour démarrer la conduite autonome pendant l'exploitation sous commande d'assistance à la conduite, l'autorisation de démarrer la conduite autonome uniquement lorsqu'une condition d'autorisation est satisfaite,
la condition d'autorisation étant qu'un temps de suspension de transition se soit écoulé après la réception de la demande de démarrage de conduite autonome ;
**caractérisé en ce que** le procédé comprend en outre :
lors de la réception de la demande de démarrage de conduite autonome pendant l'exploitation sous commande d'assistance à la conduite, la détermination du fait qu'une première direction de commande pour la conduite autonome est cohérente ou non avec une deuxième direction de commande pour la commande d'assistance à la conduite,
la définition d'un premier temps comme temps de suspension de transition lorsque la première direction de commande est cohérente avec la deuxième direction de commande, et
la définition d'un deuxième temps comme temps de suspension de transition lorsque la première direction de commande n'est pas cohérente avec la deuxième direction de commande,
le deuxième temps étant plus long que le premier temps.

4. Procédé selon la revendication 3, comprenant en outre :
la modification du temps de suspension de transition en un troisième temps lorsque la première direction de commande devient cohérente avec la deuxième direction de commande après que le deuxième temps a été défini comme temps de suspension de transition et pendant l'exploitation sous commande d'assistance à la conduite,
le troisième temps étant plus court que le deuxième temps.
